# EUROPÄISCHE PATENTSCHRIFT

(11) **EP 3 563 998 B1**
(45) Veröffentlichungstag und Bekanntmachung des Hinweises auf die Patenterteilung: **27.04.2022**
(21) Anmeldenummer: 19165733.7
(22) Anmeldetag: 28.03.2019
(51) Int. Cl.: B26F 1/16, B26D 7/18, G01N 1/06

(54) **PAPIERSTANZE MIT OSZILLIERENDEM HOHLBOHRER**
PAPER HOLE PUNCH WITH OSCILLATING HOLLOW DRILL
POINÇONNEUSE À PAPIER POURVUE DE FORET CREUX OSCILLANT

(30) Priorität: 10.04.2018 DE 102018205383
(43) Veröffentlichungstag der Anmeldung: 06.11.2019
(73) Patentinhaber: Forschungszentrum Jülich GmbH, 52425 Jülich (DE); Weyen, Jens, 47800 Krefeld (DE)
(72) Erfinder: WEYEN, Jens, 47800 Krefeld (DE); JAHNKE, Siegfried, 42551 Velbert (DE); KOCHS, Johannes, 52078 Aachen (DE)
(74) Vertreter: Gille Hrabal Partnerschaftsgesellschaft mbB Patentanwälte

(56) Entgegenhaltungen:
- EP-A2- 0 674 010
- DE-B- 1 196 062
- DE-U1-202012 009 691
- US-A- 3 357 289

## Beschreibung

Die Erfindung betrifft eine Stanze, die einen Hohlbohrer als Stanz- und Schneidwerkzeug und einen Antrieb für den Hohlbohrer umfasst und die für ein Stanzen von Papier, Pflanzenblättern oder anderen Materialien geeignet ist. Eine solche Stanze wird nachfolgend auch Papierstanze genannt.

Ein rotierender Hohlbohrer mit Drehzahlgeschwindigkeiten von mehr als 1500 Umdrehungen/min für ein Perforieren von Papier ist aus der deutschen Auslegeschrift 1 196 062 bekannt. Problematisch ist, dass unvollständig durchtrenntes Material durch den rotierenden Hohlbohrer mitgerissen werden kann. Dies kann unbefriedigende Stanzergebnisse zur Folge haben, insbesondere, wenn die gewünschte Stanzprobe wertvoll ist, weil sie zum Beispiel wie bei Proben von pflanzlichen Blättern für routinemäßige Laboruntersuchungen verwendet werden soll und keine Vermischungen auftreten dürfen.

Aus der Druckschrift DE 20 2012 009 691 U1 ist eine Drehschneidvorrichtung für Naturfaserstücke bekannt. Sie weist einen oszillierenden Hohlbohrer als Stanzwerkzeug auf.

Es ist Aufgabe der Erfindung, eine weiter entwickelte Stanze mit einem Hohlbohrer zu schaffen, mit der in gewünschter Weise Papier und andere blattartige Materialien gestanzt werden können. Dabei soll die Stanze insbesondere so konstruiert sein, dass Stanzstücke nicht nur am Rand, sondern auch mit größerem Abstand vom Rand eines Papiers oder anderen Materials gestanzt werden können.

Die Aufgabe der Erfindung wird durch den Gegenstand von Patentanspruch 1 gelöst.

Die Lösung der Aufgabe umfasst eine Papierstanze, einen Hohlbohrer als Stanzwerkzeug und einen Antrieb für den Hohlbohrer. Wird der Antrieb aktiviert, so oszilliert der Hohlbohrer. Eine solche Stanze wird nachfolgend daher auch Oszillationsstanze genannt. Der Hohlbohrer bewegt sich also mechanisch zwischen zwei verschiedenen Positionen hin und her. Durch eine Oszillationsbewegung während eines Stanzens wird vermieden, dass Papier mitgerissen wird. Es werden daher gute Stanzergebnisse erzielt.

Vorzugsweise rotiert der Hohlbohrer durch die Aktivierung des Antriebs abwechselnd in entgegengesetzte Richtungen und oszilliert also auf diese Weise, um weiter verbesserte Stanzergebnisse zu erzielen. Bei dieser Ausgestaltung rotiert der Hohlbohrer also zunächst gemäß einer ersten Drehrichtung, um im Anschluss daran die Drehrichtung zu wechseln und in entgegengesetzter zweiter Richtung zu rotieren. Erste und zweite Drehrichtung wechseln sich fortlaufend während des Betriebs der Papierstanze ab.

Bei einfachem Stanzen kommt es häufig vor, dass Papier- oder Materialfasern nicht vollständig durchtrennt werden, die Stanzprobe dadurch hängen bleibt und deshalb verloren geht. Durch die oszillierenden Drehbewegungen wird ein solches unvollständiges Durchtrennen zuverlässig vermieden. Dabei sind die Rotationsbewegungen vorzugsweise gering. Eine Drehbewegung des Hohlbohrers in einer jeden Drehrichtung beträgt daher in einer Ausgestaltung der Erfindung bis zu 10°, vorzugsweise bis zu 5°, besonders bevorzugt bis zu 3°. Bei dieser Ausgestaltung wird der Hohlbohrer also zum Beispiel um maximal 10° in der vorgenannten ersten Drehrichtung gedreht. Im Anschluss daran wechselt die Drehrichtung und der Hohlbohrer wird um 10° in der zweiten Drehrichtung zurückgedreht.

Um die Vorrichtung technisch einfach herstellen zu können, umfasst in einer vorteilhaften Ausgestaltung der Antrieb eine Welle, die im Anschluss an ein Aktivieren des Antriebs rotiert. Ein mit der Welle verbundener Oszillatorkopf wandelt die Drehbewegung der Welle des Antriebs in eine oszillierende Bewegung für den Hohlbohrer um. Der Hohlbohrer ist also so mit dem Oszillatorkopf verbunden, dass eine Oszillationsbewegung von dem Oszillatorkopf auf den Hohlbohrer übertragen wird. Insbesondere wird so erreicht, dass eine Drehbewegung der Welle in eine oszillierende Drehbewegung umgesetzt wird, wie dies von elektrischen Zahnbürsten bekannt ist. Der Oszillatorkopf kann daher eine Mechanik umfassen, wie diese bei elektrischen Zahnbürsten oder auch bei oszillierenden Elektrowerkzeugen zum Schleifen, Sägen oder Schneiden eingesetzt werden, um eine Drehbewegung eines elektrischen Antriebs in eine oszillierende Drehbewegung umzusetzen. Der Oszillatorkopf ist insbesondere ein Bauteil, welches zunächst eigenständig gefertigt und im Anschluss daran mit der Welle des Antriebs auf der einen Seite und einem Bauteil auf der anderen Seite verbunden wird, welches für den Hohlbohrer vorgesehen ist oder den Hohlbohrer umfasst, um es technisch einfach fertigen und bei Bedarf mit geringem Aufwand reparieren zu können.

Innerhalb des Hohlbohrers kann ein beweglich gelagerter Auswerfer vorhanden sein, der durch eine Auswerfbewegung im Hohlbohrer befindliches Papier auswerfen kann. Gestanztes Papier kann so kontrolliert und zuverlässig aus dem Hohlbohrer herausgedrückt werden, ohne das gestanzte Papier dabei zu beschädigen. Wird der Auswerfer in Auswerfrichtung bewegt, dann bewegt sich der Auswerfer auf die Öffnung des Hohlbohrers zu, mit der zuvor gestanzt worden ist.

Um mit technisch geringem Aufwand den Auswerfer in Auswerfrichtung bewegen zu können, sind ein oder mehrere Magnete vorhanden, die durch magnetische Kräfte die Auswerfbewegung bewirken.

In einer Ausgestaltung ist daher der Auswerfer magnetisch. Alternativ oder ergänzend gibt es einen außerhalb des Hohlbohrers angeordneten Magneten, der die Auswerfbewegung bewirken kann. Dieser außerhalb des Hohlbohrers angeordnete Magnet kann so bewegt werden, dass dadurch der Auswerfer in Auswerfrichtung bewegt wird.

Die Papierstanze umfasst zwei gelenkig miteinander verbundene Arme, wobei an dem verschwenkbaren, freien Ende des einen Arms der Hohlbohrer und/oder ein Bohrfutter für den Hohlbohrer angebracht sind. Dieser Arm wird nachfolgend auch Hauptarm genannt. Ein Bohrfutter kann und soll den Hohlbohrer kraftschlüssig halten. Der zu fixierende Hohlbohrer wird dann beispielsweise zwischen drei Spannbacken des Bohrfutters festgeklemmt. Im Inneren des Bohrfutters kann sich eine Schraube befinden, die beim Zudrehen Spannbacken in einen Kegel schiebt und dadurch spannt. Vorzugsweise ist ein Bohrfutter vorgesehen, das sich trotz geeignet hoher Spannkräfte ohne Werkzeug, also von Hand, schließen und öffnen lässt.

Das Bohrfutter ist im Fall eines magnetischen Auswerfers vorteilhaft aus nicht-magnetisierbarem Material gefertigt, da magnetisierbares Material die Wirkweise des magnetischen Auswerfers zum Auswurf der gestanzten Probe beeinträchtigen würde. Das verschwenkbare Ende des anderen Arms umfasst vorzugsweise den außerhalb des Hohlbohrers angeordneten Magneten, mit dem eine Auswerfbewegung des Auswerfers bewirkt werden kann.

Das verschwenkbare Ende des anderen Arms ist erfindungsgemäß teleskopierbar und zwar vorzugsweise derart, dass er durch Teleskopieren kürzer sein kann als der Hauptarm mit dem Hohlbohrer und/oder dem Bohrfutter. Durch das Teleskopieren kann die Länge des Arms geändert werden. Diese Ausgestaltung trägt dazu bei, dass ein am teleskopierbaren Arm angebrachter Magnet so bewegt werden kann, dass eine Auswerfbewegung des Auswerfers bewirkt wird.

Das verschwenkbare Ende des anderen Arms ist so angeordnet oder kann so angeordnet werden, dass dieses als Widerlager für den Hohlbohrer beim Stanzen dienen kann. Der andere Arm trägt so dazu bei, dass gute Stanzergebnisse erzielt werden können.

Vorzugsweise ist eine Gummischeibe als Widerlager vorhanden, die insbesondere auswechselbar durch eine Halterung gehalten wird. Eine Gummischeibe trägt dazu bei, dass Papier während des Stanzens nicht unplanmäßig beschädigt wird. Bei Abnutzung der Gummischeibe kann diese vorteilhaft leicht ausgetauscht werden, wenn diese auswechselbar durch die Halterung gehalten wird. Durch das oszillierende Stanzen ist ein sauberes Stanzen selbst bei geringem Druck des Stanzwerkzeuges auf die Gummischeibe sichergestellt.

Die Stanze ist in der Art einer Grillzange konstruiert. Diese verfügt dann über die vorgenannten zwei Arme, die verschwenkbar miteinander verbunden sind. Die Arme sind vorzugsweise wenigstens 5 cm, besonders bevorzugt wenigstens 10 cm lang. Durch die Konstruktion der Blattstanze in der Art einer Grillzange, können durch die Länge der Arme grundsätzlich nicht so hohe Drücke erreicht werden wie bei einer Stanze mit sehr kurzen Armen. Diese Konstruktion ermöglicht es aber, Stanzstücke selbst weit entfernt vom Rand eines Blattes oder anderen Materials auszustanzen.

Der Antrieb wird bevorzugt durch ein Verschieben des teleskopierbaren Arms der beiden gelenkig miteinander verbundenen Arme ein- und/oder ausgeschaltet, um die Zahl der Teile gering zu halten, auf besonders einfache und schnelle Weise stanzen zu können und eine möglichst lange Laufzeit der für den Antrieb benötigten Batterie bzw. des Akkus zu gewährleisten. Durch ein Vor- bzw. Zurückschieben des teleskopierbaren Arms kann dann insbesondere ein mechanischer, optischer oder anders gestalteter Taster oder Schalter so bewegt bzw. aktiviert werden, dass dadurch ein elektrischer Stromkreis für ein Ausschalten unterbrochen oder für ein Einschalten geschlossen werden kann. Dies sorgt dafür, dass der Antrieb des Oszillatorkopfs nur während der Zeit des oszillierenden Stanzens aktiviert wird. Alternativ kann eine Schwenkbewegung unmittelbar einen elektrischen Stromkreis für ein Ausschalten unterbrechen sowie für ein Einschalten schließen.

Um technisch einfach gefertigt werden zu können, umfasst die Papierstanze einen Bohradapter, der zunächst eigenständig hergestellt wird, um im Rahmen einer Endmontage in die Papierstanze eingebaut zu werden. Der Bohradapter wird dann insbesondere an dem Oszillatorkopf befestigt. Der Bohradapter umfasst ein Bohrfutter zur Aufnahme des Hohlbohrers, der vorzugsweise an dem im vorhergehenden Anspruch genannten Oszillatorkopf angebracht wird. Ein Defekt kann bei einer solchen modularen Bauweise leicht durch Austausch des entsprechenden Moduls behoben werden.

Vorzugsweise gibt es eine Antriebseinheit, die als Antrieb einen Elektromotor, einen Akku oder eine Batterie, einen Schalter oder Taster für ein Ein- und Ausschalten, eine Elektronik und optional eine Spule zum induktiven Aufladen eines Akkus umfasst. Diese Antriebseinheit wird ebenfalls selbstständig gefertigt und im Anschluss daran mit weiteren Einheiten zu der Papierstanze zusammengefügt, um so vorteilhaft eine modular gebaute Papierstanze bereitzustellen.

In einer vorteilhaften Ausgestaltung ist eine Saugeinrichtung vorhanden, die während eines Stanzens Luft durch den Hohlbohrer hindurch ansaugen kann. Luft tritt dann in den Hohlbohrer durch die scharfkantige Öffnung des Hohlbohrers ein, die für das Stanzen vorgesehen ist. Hierdurch ist es möglich, gestanztes Papier zuverlässig in einem gewünschten Zeitraum im Hohlbohrer zu halten.

Um ein Auswerfen von Papier aus dem Hohlbohrer bei der vorgenannten Ausführungsform sicherzustellen, ist vorzugsweise eine Einrichtung vorhanden, die nach einem Stanzen das Ansaugen stoppt oder die Luftströmung umkehrt. Die umgekehrte Luftströmung unterstützt aktiv ein Auswerfen der Stanzprobe.

Die Papierstanze ist vorzugsweise so dimensioniert, dass durch die Länge der Arme und Anordnung in der Art einer Grillzange auch Stanzproben weiter entfernt vom Rand eines Papiers oder anderen Materials genommen werden können.

Durch die Erfindung wird also eine Papierstanze bereitgestellt, bei der ein Hohlbohrer oszillieren kann. Die Papierstanze kann dann auch Oszillationsstanze genannt werden.

Ein Ausführungsbeispiel wird anhand von Figuren näher erläutert. Es zeigen:
- Figur 1:: Papierstanze in einer Ruhestellung
- Figuren 2 bis 7:: verschiedene Stellungen für ein Stanzen von Papier

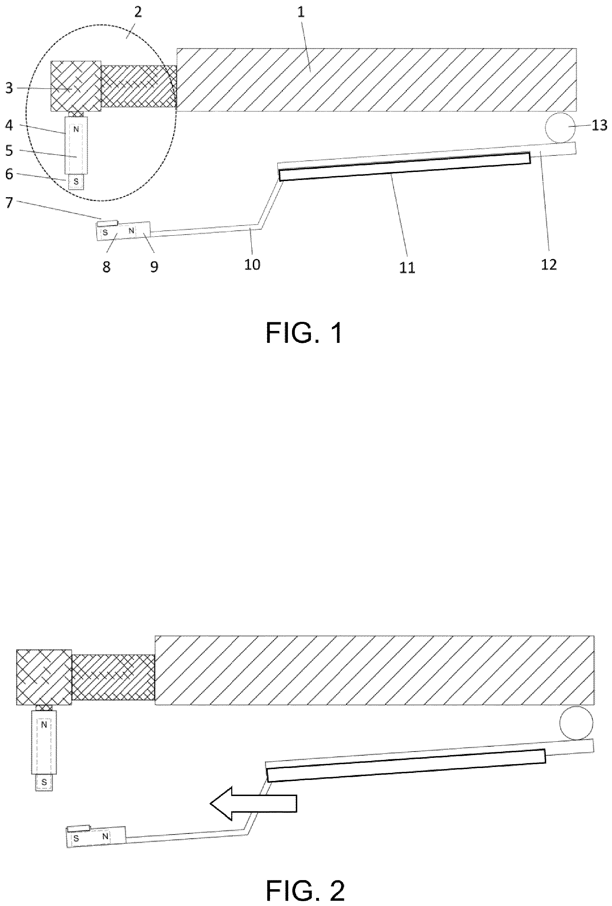

Die Figur 1 zeigt eine Papierstanze in einer Ruhestellung. Von dieser Ruhestellung ausgehend kann gestanzt werden. Die Papierstanze umfasst einen Hauptarm mit Antriebseinheit 1, ein Stanzmodul 2 mit Hohlbohrer 6 und einen teleskopierbaren unteren Arm 10, 12. Der teleskopierbare Arm 10, 12 ist zweigeteilt. Ein erstes Teil 12 des teleskopierbaren Arms ist an einem Scharnier 13 am hinteren Ende der Antriebseinheit befestigt. Dieser Teil des teleskopierbaren Arms wird daher nachfolgend auch feststehender Arm 12 genannt wird. Ein zweites Teil 11 des teleskopierbaren Arms, der auch Schiebarm genannt wird, ist durch ein oder mehrere Schienen 11 verschiebbar mit dem feststehenden Arm 12 verbunden, so dass die Länge des teleskopierbaren Arms 10, 12 durch Verschieben des Schiebarms 10 geändert werden kann. Für ein Stanzen ist eine Gummischeibe 7 als Widerlager vorhanden.

Das Stanzmodul 2 umfasst einen Oszillatorkopf 3, einen Bohradapter 4 mit Bohrfutter, einen Hohlbohrer 6, einen magnetischen Auswerfer 5 und optional eine nicht gezeigte Vakuumpumpe. Mit Ausnahme des magnetischen Auswerfers 5 sind alle Komponenten des Stanzmoduls 2 aus nicht-magnetisierbarem Material aufgebaut.

Der Hohlbohrer 6 ist ein hohlzylindrisches auswechselbares Schneid- bzw. Stanzwerkzeug. Korkbohrer oder Biopsiestanzen können als Hohlbohrer 6 vorgesehen sein.

Am verschwenkbaren Ende des Schiebarms 10 befindet sich ein axial magnetisierter Stabmagnet, der auch Schiebarmmagnet 8 genannt wird, da dieser durch ein Ändern der Länge des telekopierbaren Arms 10, 12 verschoben werden kann.

In der in Figur 1 gezeigten Ausgangs- oder Ruheposition liegen gleichsinnige Pole des Schiebarmmagneten 8 und des magnetischen Auswerfers 5 so nahe beieinander, dass sie sich gegenseitig abstoßen. Dies führt dazu, dass der magnetische Auswerfer 5 innerhalb des Hohlbohrers nach oben gedrückt wird und in der obersten Position an einem oben im Bohrfutter befindlichen Anschlag gehalten wird.

Durch das in der Figur 1 gezeigte Ausführungsbeispiel werden folgende Vorteile erzielt:
- Eine Bedienung mit nur einer Hand, die Bedienhand genannt wird, ist möglich. Ergonomisch unterschiedliche Varianten für Links-/Rechtshänder können realisiert werden.
- Ein sauberes und zuverlässiges Stanzen kann mit einem Hohlbohrer 6 durch gleichzeitiges Stanzen (vertikale Bewegung) und oszillierendes Schneiden (Rotationsbewegung) erzielt werden.
- Ein zuverlässiges Festhalten der Stanzprobe im Hohlbohrer 6 und einfaches Auswerfen in ein beliebiges Sammelgefäß sind möglich.
- Es kann eine kleine, schlanke Bauform realisiert werden, die eine gute Zugänglichkeit der Oszillationsstanze zum Beispiel auch zu Pflanzenblättern in dichtem Bestand erlaubt.
- Ein geringes Gewicht kann realisiert werden.
- Ein kabelloser Betrieb ist möglich, wenn die Stromversorgung über einen Akku oder eine Batterie erfolgt.
- Es kann mit sehr geringem Stromverbrauch gestanzt werden, so dass lange Standzeiten für Akku oder Batterie möglich sind.

Für ein Stanzen werden Blattstücke mit Hilfe des am unteren Ende scharfen Hohlbohrers 6 ausgeschnitten. Der Hohlbohrer 6 (das eigentliche Schneid- bzw. Stanzwerkzeug) kann schnell und einfach ausgetauscht werden, wenn der für ein Stanzen vorgesehene untere Rand stumpf geworden ist. Der Hohlbohrer kann auch durch die Kombination mit einer Druckwasser- oder Druckreinigungsmittel-Leitung gereinigt werden. Zur Vermeidung von Kontamination, Übertragung von Pathogenen/Organismen/Restflüssigkeit und/oder Restgewebe/Restmaterial der vorherigen Proben kann auch mit effektiveren Desinfektionsmitteln gereinigt werden.

Zum Ausstanzen wird der Schiebarm 10 mit der Bedienhand wie in der Figur 2 durch einen Pfeil angedeutet nach vorne geschoben und über das zu stanzende Blatt geführt.

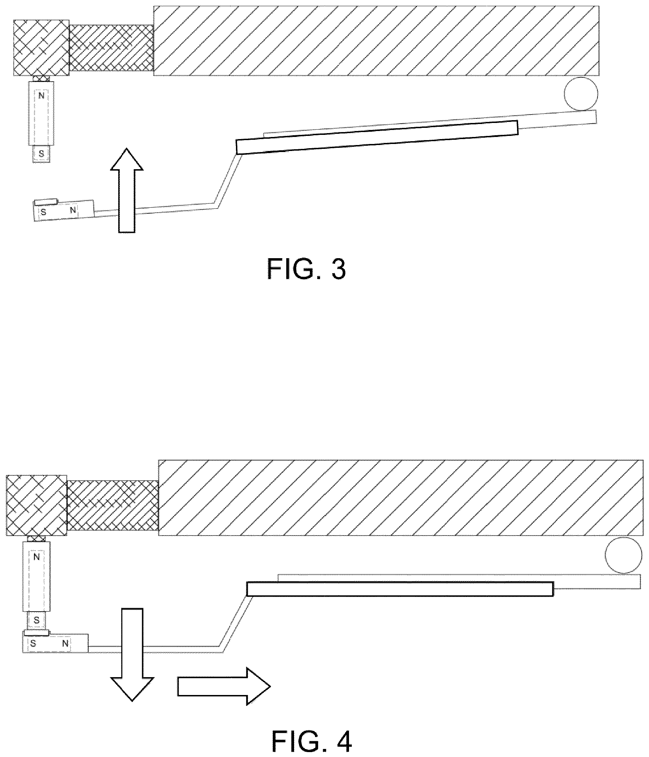

Sobald der teleskopierbare Arm 10, 12 danach zum Stanzen wie in der Figur 3 durch einen Pfeil angedeutet nach oben gezogen wird, wird ein nicht dargestellter Schalter betätigt. Ein Stromkreis wird geschlossen und ein in der Antriebseinheit 1 im Hauptarm befindlicher Motor läuft an. Der Hohlbohrer 6 fängt an zu oszillieren. Durch die Ausrichtung der Magnetpole des Schiebarmmagneten 8 und des magnetischen Auswerfers 5 bleibt wie bei Figur 1 beschrieben auch beim Oszillieren der magnetische Auswerfer 5 in der obersten Position innerhalb des Hohlbohrers. Der teleskopierbare Arm 10, 12 wird nun manuell weiter so weit wie in der Figur 3 durch einen Pfeil gezeigt nach oben gezogen, bis der Hohlbohrer 6 das Blatt durchtrennt hat und auf die Gummischeibe 7 aufsetzt. Für den Einsatz der Papierstanze in einem automatisierten Probennahmesystem kann das Aufsetzen des Hohlbohrers 6 auf die Gummischeibe 7 zusätzlich durch eine Kraftmessung z.B. im Scharnier des oberen und unteren Arms exakt überprüft werden.

Während des oszillierenden Ausstanzens wird der Hohlbohrer 6 abwechselnd nach links und rechts gedreht und zwar vorzugsweise in einem Winkel von ± 3° und mit einer Frequenz von z.B. 5 bis 50 Hz. Der Vorteil des oszillierenden Stanzens im Vergleich zu einem Stanzen, bei dem nur Druck vertikal eingesetzt wird, liegt in der Kombination aus Stanzen und Bohren. Dabei sorgt das oszillierende Bohren dafür, dass es nicht wie beim einfachen Bohren, das nur in einer Drehrichtung erfolgt, zum Mitreißen von noch unvollständig durchgetrenntem Material kommt. Damit lassen sich auch Blattproben mit faserartigen Strukturen, wie sie zum Beispiel in den Blattadern von Pflanzen vorkommen, zuverlässig ausstanzen.

Bei Verwendung von hochpräzisen Biopsiestanzen als Hohlbohrer 6 bleibt die Stanzprobe in aller Regel zuverlässig in dem Hohlbohrer 6 hängen. Für Stanzproben, bei denen das nicht der Fall ist, wird die Probe in einer vorteilhaften Ausgestaltung zusätzlich durch angelegten Unterdruck festgehalten.

Sobald die Blattprobe ausgestanzt ist, wird der untere teleskopierbare Arm 10, 12 von der Bedienhand wieder frei gegeben. Durch die Spreizkraft einer in dem hinteren Scharnier 13 befindlichen Feder öffnet sich die Oszillationsstanze wieder. Sobald sich der teleskopierbare Arm 10, 12 wieder nach unten bewegt, wird der Motor ausgeschaltet und das Oszillieren beendet. Der Schiebarm 10 wird anschließend mit der Bedienhand wieder zurückgeschoben. Die Oszillationsstanze kann danach zu einem Gefäß geführt werden, in das die Blattprobe abgelegt werden soll. Diese beiden Bewegungen werden in der Figur 4 durch Pfeile angedeutet.

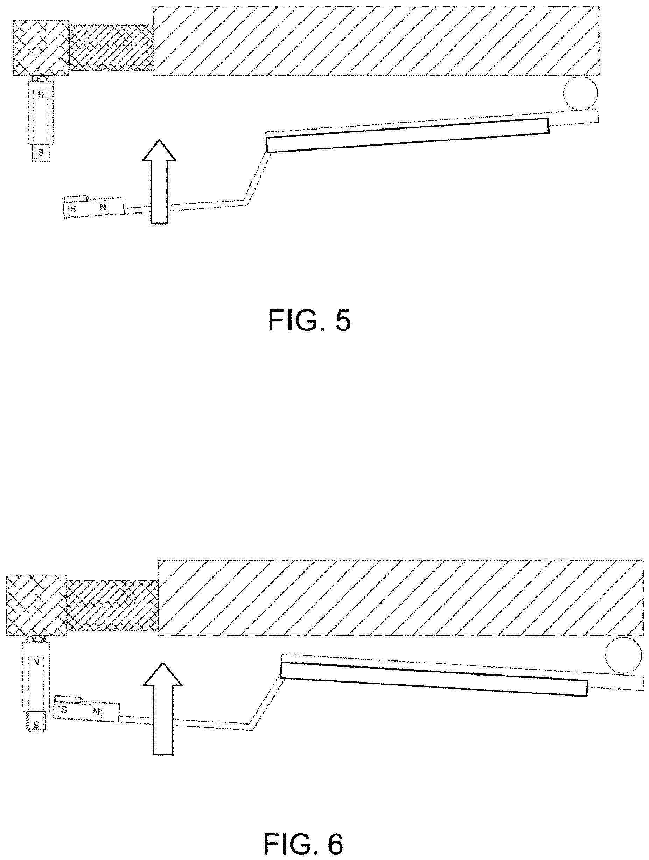

Zum Auswerfen der Blattprobe wird anschließend der teleskopierbare Arm 10, 12 wie in der Figur 5 durch einen Pfeil angedeutet mit der Bedienhand nach oben gezogen (wie z.B. bei einer Grillzange). Durch die Verlagerung der Position des Schiebarmmagneten 8, wie dies der Figur 6 zu entnehmen ist, schnellt der sich innerhalb des Hohlbohrers 6 befindliche magnetische Auswerfer 5 dann nach unten und wirft die gestanzte Blattprobe aus. Um eine kontrollierte und gezielte Probenabgabe zu gewährleisten, kann die Papierstanze so konstruiert werden, dass beim Nach-oben-Ziehen des teleskopierbaren Arms ein Druckpunkt (Widerstand) überwunden werden muss (wie zum Beispiel bei einer Laborpipette) kurz bevor der Schiebarmmagnet 8 in die Position gebracht werden kann, die zum Nach-unten-Schnellen des magnetischen Auswerfers 5 führt.

Wenn das Stanzmodul mit einer Saugeinrichtung ausgestattet ist, wird in einer vorteilhaften Ausgestaltung für das Auswerfen der Probe der angelegte Unterdruck dann entweder auf Überdruck umgeschaltet oder abgeschaltet. Der Überdruck kann beispielsweise dazu genutzt werden, um das Auswerfen alternativ zur Magnetkraft zu ermöglichen oder aber eine Auswerfbewegung zu unterstützen.

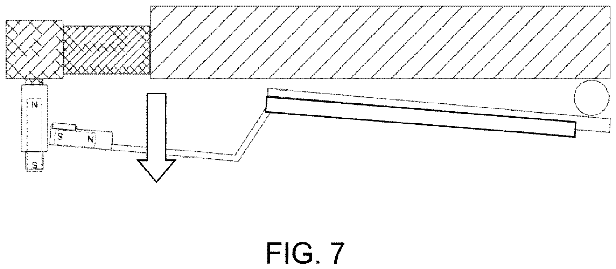

Sobald der teleskopierbare Arm 10, 12 wieder durch die Bedienhand frei gegeben wurde, schwenkt der teleskopierbare Arm 10, 12 wie in der Figur 7 durch einen Pfeil angedeutet nach unten. Dabei wird der magnetische Auswerfer 5 wieder in seine Ausgangsposition gedrückt, die Ruhestellung ist danach wieder erreicht, und es kann die nächste Blattprobe ausgestanzt werden.

Die Antriebseinheit 1 kann ein ergonomisch angepasstes Basismodul der Oszillationsstanze sein. Die Antriebseinheit 1 ist grundsätzlich ein eigenständig gefertigtes Bauteil, welches nach seiner Fertigstellung mit weiteren Einheiten zur Papier- bzw. Oszillationsstanze zusammengefügt wird. Der Oszillatorkopf 3 wird mit der Antriebseinheit 1 verbunden und zwar vorzugsweise durch eine Steckverbindung. Der Oszillatorkopf 3 wird dann also für ein Verbinden aufgesteckt.

Unterhalb des Oszillatorkopfs 3 befindet sich der Bohradapter 4, an dessen unterem Ende sich ein Bohrfutter zur Aufnahme des Hohlbohrers 6 befindet. Der Bohradapter 4 ist so aufgebaut, dass sich in seinem Inneren ein als Auswerfer 5 dienender, in der Regel runder, axial magnetisierter Stabmagnet befindet, dessen unteres Ende in den Hohlbohrer 6 hineinragt. Der Auswerfer 5 kann sich frei nach oben und unten innerhalb des Bohradapters 4 und des Hohlbohrers 6 bewegen, wobei die maximale Hubhöhe z.B. 3 mm beträgt. Der Südpol (Polausrichtung hier nur beispielhaft festgelegt) des magnetischen Auswerfers 5 befindet sich unten. Wenn der magnetische Auswerfer 5 im Ruhezustand am oberen Anschlag ist, befindet sich sein unteres Ende z.B. etwa 2 mm oberhalb der unteren Kante (der Schneide) des Hohlbohrers 6.

Der teleskopierbare Arm 10, 12 ist mit einem Scharnier 13 und einer Spreizfeder am hinteren Ende der armförmigen Antriebseinheit 1 angebracht. Der Schiebarm 10 ist am feststehenden Hebelarm 12 beispielsweise mittels einer oder mehrerer Schienen 11 so befestigt, dass er mit den Fingern der Bedienhand in einem festgelegten Schiebebereich (z.B. 2 cm) mühelos nach vorne bzw. nach hinten geschoben werden kann. Vorzugsweise gibt es für den Schiebarm 10 Positionsarretierungen in der hinteren und vorderen Position, in denen der Schiebarm jeweils durch ein leichtes, aber eindeutiges Einrasten gehalten werden kann.

Am vorderen verschwenkbaren Ende des teleskopierbaren Arms 10, 12 befindet sich eine Halterung zur Aufnahme der auswechselbaren Gummischeibe 7. Die Gummischeibe 7 weist z.B. einen Durchmesser von 10 mm auf und ist beispielsweise 2 mm dick. Diese Gummischeibe 7 dient als Widerlager für den Hohlbohrer 6 beim Stanzen. Direkt unterhalb der Gummischeibenhalterung ist in Längsausrichtung des Schiebarms 11 der Stabmagnet 8 (Schiebarmmagnet) so angebracht, dass sein vorderes Ende (z.B. Südpol) sich zusammen mit der Gummischeibe 7 genau unterhalb des Hohlbohrers 6 befindet, wenn sich der Schiebarm 10 in der vorderen Position befindet. Durch diese Polanordnung des Schiebarmmagneten 8 wird der im Hohlbohrer 6 befindliche magnetische Auswerfer 5 (mit Südpol an der unteren Seite) nach oben gedrückt. Dies sorgt dafür, dass die Schneide des Hohlbohrers 6 während des oszillierenden Stanzens frei ist und nicht von dem Auswerfer 5 behindert wird.

Beim Loslassen des unteren Hebels wird der für die Oszillation zuständige Motor automatisch abgeschaltet. Nach Zurückschieben des Schiebehebels 10 und anschließendes Nach-oben-Bewegen des teleskopierbaren Arms 10, 12 wie in den Figuren 4 und 5 gezeigt kommt der Südpol des Schiebarmmagneten 8 ganz knapp oberhalb der Mitte des Auswerfers 5 (mit Südpol nach unten) in Position. Durch die Abstoßung der beiden Südpole (zusätzlich verstärkt durch die Anziehung des Nordpols des magnetischen Auswerfers 5 und des Südpols des Schiebarmmagneten 8) wird der magnetische Auswerfer 5 nach unten gestoßen. Der Auswerfer 5 schnellt dabei in seine untere Position und sein unteres Ende ragt dann ca. 1 mm aus dem Hohlbohrer 6 heraus. Eine in dem Hohlbohrer 6 befindliche Stanzprobe wird damit ausgeworfen.

Das Anlaufen des für die Oszillationsbewegung zuständigen Motors der Antriebseinheit 1 wird automatisch durch einen Schalter der Antriebseinheit 1 ausgelöst, wenn sich der Schiebarm 10 in seiner vorderen Position befindet und nach oben in Richtung Hohlbohrer 6 bewegt wird. Sobald der teleskopierbare Hebelarm 10, 12 bei Loslassen durch den in dem Scharnier 13 befindlichen Federmechanismus wieder nach unten geht, wird der Motor der Antriebseinheit 1 ausgeschaltet. Damit ist gewährleistet, dass sich der Motor nur während des oszillierenden Stanzens dreht. Damit wird die Laufzeit des Motos auf ein Minimum reduziert, und es werden lange Akkulaufzeiten erreicht.

Die Motorhalterung mit dem Akku können so konstruiert werden, dass ein induktives Aufladen des Akkus wie z.B. bei einer elektrischen Zahnbürste möglich ist.

Bei normalen Blättern bleibt das ausgestanzte Blattstück auf Grund der hohen Präzision der Hohlbohrer 6 (insbesondere bei Biopsiestanzen) in aller Regel im Hohlbohrer 6 zuverlässig hängen. Die in dem Hohlbohrer 6 befindliche Probe kann daher mit der Oszillationsstanze zu einem an anderer Stelle befindlichen Ablagegefäß geführt und dort zuverlässig ausgeworfen werden. Bei sehr dünnen Blättern ist die Fixierung der Probe in dem Hohlbohrer 6 dagegen nicht in allen Fällen gewährleistet. Für solche Fälle kann die Papierstanze zusätzlich mit einer Vakuumpumpe ausgestattet sein, die vorzugsweise über den Oszillatorkopf 3 und den Bohradapter 4 innerhalb des Hohlbohrers 6 während des Stanzens einen Unterdruck erzeugt. Dazu weist der in dem Bohradapter 4 und dem Hohlbohrer 6 befindliche magnetische Auswerfer 5 ein gewisses Spiel auf. Der Außendurchmesser des Auswerfers 5 ist dann kleiner als der Innendurchmesser des Hohlbohrers 6, so dass am unteren Ende des Hohlbohrers 6 ein Luftstrom in den Hohlbohrer hinein sichergestellt ist. Beim Austanzen einer Stanzprobe wird diese dann sofort nach oben gezogen und bleibt am unteren Ende des magnetischen Auswerfers 5 innerhalb des Hohlbohrers 6 hängen.

Das Auswerfen der Stanzprobe kann wie zuvor beschrieben erfolgen. Da das anliegende Vakuum aber möglicherweise ein zuverlässiges Abfallen der Stanzprobe verhindert, können zusätzliche Maßnahmen erforderlich sein. Dabei sind folgende Möglichkeiten zu bevorzugen. Die Luftführung der Vakuumpumpe wird über eine Ventilvorrichtung von Ansaugen (Vakuum) auf Ausblasen (Überdruck) geschaltet. Der Bohradapter ist so konstruiert, dass der Auswerfer 5 genügend Strömungsfläche für das Ansaugen der Luft frei lässt, wenn er sich in der oberen Position befindet. Wenn der magnetische Auswerfer 5 dagegen nach unten gestoßen wird, um die Stanzprobe auszuwerfen, kann er in einer Ausgestaltung den Luftkanal so verschließen, dass am unteren Ende des Hohlbohrers 6 kein Lufteinstrom mehr erfolgt. Damit ist dann ein zuverlässiges Auswerfen der Stanzprobe auch bei dieser Ausgestaltung gewährleistet. In einer anderen Ausgestaltung bleibt ein Luftspalt bestehen, und das Auswerfen der Probe wird durch das Umschalten der Luftführung von Ansaugen (Vakuum) auf Ausblasen (Überdruck) unterstützt.

Um Strom zu sparen, wird die Vakuumpumpe vorzugsweise kurz vor dem Stanzvorgang eingeschaltet und direkt nach Auswerfen der Probe wieder ausgeschaltet. Die elektrische Versorgung der Vakuumpumpe erfolgt vorzugsweise über denselben Akku bzw. dieselbe Batterie wie der für die Oszillationsbewegung zuständige Motor.

Grundsätzlich kann die Papierstanze auch so ausgestaltet werden, dass sie in Robotersysteme zur automatisierten Probennahme von beliebigen Proben integriert wird.

Durch die Erfindung steht eine Papierstanze zur einfachen und routinemäßigen Gewinnung von Blattproben für weitere Analysen zur Verfügung. Es können auch andere blattartige Materialien anstelle von Papier gestanzt werden.

## Patentansprüche

1. Papierstanze, die einen Hohlbohrer (6) als Stanzwerkzeug und einen Antrieb für den Hohlbohrer (6) umfasst, wobei der Hohlbohrer (6) durch Aktivierung des Antriebs oszilliert, wobei zwei gelenkig miteinander verbundene Arme vorhanden sind, wobei an dem verschwenkbaren Ende des einen Arms der Hohlbohrer angebracht ist und das verschwenkbare Ende des anderen, teleskopierbaren Arms (10, 12) so angeordnet ist oder angeordnet werden kann, dass dieses als Widerlager für den Hohlbohrer (6) beim Stanzen dienen kann.

2. Papierstanze nach dem vorhergehenden Anspruch, **dadurch gekennzeichnet, dass** der Hohlbohrer (6) durch die Aktivierung des Antriebs abwechselnd in entgegengesetzte Richtungen rotiert.

3. Papierstanze nach dem vorhergehenden Anspruch, **dadurch gekennzeichnet, dass** eine Drehbewegung des Hohlbohrers (6) in einer jeden Drehrichtung bis zu 10°, vorzugsweise bis zu 5°, besonders bevorzugt bis zu 3° beträgt.

4. Papierstanze nach einem der vorhergehenden Ansprüche, **dadurch gekennzeichnet, dass** ein Oszillatorkopf (3) vorhanden ist, der eine Drehbewegung einer Welle des Antriebs in eine oszillierende Bewegung für den Hohlbohrer (6) umsetzt.

5. Papierstanze nach einem der vorhergehenden Ansprüche, **dadurch gekennzeichnet, dass** innerhalb des Hohlbohrers ein beweglich gelagerter Auswerfer (5) vorhanden ist, der durch eine Auswerfbewegung im Hohlbohrer (6) befindliches Papier auswerfen kann.

6. Papierstanze nach dem vorhergehenden Anspruch , **dadurch gekennzeichnet, dass** der Auswerfer (5) magnetisch ist und/oder durch die Kraft eines außerhalb des Hohlbohrers (6) angeordneten Magneten (8) für ein Auswerfen von Papier bewegt werden kann.

7. Papierstanze nach dem vorhergehenden Anspruch, **dadurch gekennzeichnet, dass** an dem verschwenkbaren Ende des einen Arms (1, 3) der Oszillatorkopf (3), und/oder ein Bohrfutter (4) für den Hohlbohrer (6) angebracht ist und das verschwenkbare Ende des anderen, teleskopierbaren Arms (10, 12) vorzugsweise den außerhalb des Hohlbohrers (6) angeordneten Magneten (8) und/oder eine Gummischeibe (7) umfasst.

8. Papierstanze nach dem vorhergehenden Anspruch, **dadurch gekennzeichnet, dass** der andere, teleskopierbare Arm (10, 12) derart teleskopierbar ist, dass er durch Teleskopieren kürzer sein kann als der Arm (1, 3) mit dem Hohlbohrer (6) und/oder dem Bohrfutter.

9. Papierstanze nach einem der vorhergehenden Ansprüche, **dadurch gekennzeichnet, dass** eine Gummischeibe (7) als Widerlager vorhanden ist, die vorzugsweise auswechselbar durch eine Halterung gehalten wird.

10. Papierstanze nach dem vorhergehenden Anspruch, **dadurch gekennzeichnet, dass** ein Kraftsensor vorhanden ist, durch den ein Aufsetzen auf die Gummischeibe überwacht werden kann.

11. Papierstanze nach einem der vorhergehenden Ansprüche, **dadurch gekennzeichnet, dass** der Antrieb durch ein Verschwenken oder durch Teleskopieren von einem der beiden gelenkig miteinander verbundenen Arme (1, 3; 10, 12) ein- und/oder ausgeschaltet werden kann.

12. Papierstanze nach einem der vorhergehenden Ansprüche, **dadurch gekennzeichnet, dass** ein Bohradapter umfassend ein Bohrfutter zur Aufnahme des Hohlbohrers (6), vorhanden ist, der vorzugsweise an einem Oszillatorkopf (3) angebracht ist, wobei der Hohlbohrer (6) vorzugsweise eine Biopsiestanze ist.

13. Papierstanze nach einem der vorhergehenden Ansprüche, **dadurch gekennzeichnet, dass** eine Antriebseinheit (1) vorhanden ist, die als Antrieb einen Elektromotor, einen Akku oder eine Batterie, einen Schalter oder Taster, eine Elektronik und optional eine Spule zum induktiven Aufladen eines Akkus umfasst.

14. Papierstanze nach einem der vorhergehenden Ansprüche, **dadurch gekennzeichnet, dass** eine Saugeinrichtung vorhanden ist, die während des Stanzens Luft durch den Hohlbohrer (6) hindurch ansaugen kann.

## Claims

1. Paper punch comprising a hollow drill (6) as a punching tool and a drive for the hollow drill (6), wherein the hollow drill (6) oscillates by activation of the drive, wherein two hingedly interconnected arms are provided, wherein the hollow drill is attached to the pivotable end of one arm and the pivotable end of the other, telescopic arm (10, 12) is arranged or can be arranged such that it can serve as an abutment for the hollow drill (6) during punching.

2. Paper punch according to the preceding claim, **characterized in that** the hollow drill (6) rotates alternately in opposite directions by activation of the drive.

3. Paper punch according to the preceding claim, **characterized in that** a rotary movement of the hollow drill (6) in any direction of rotation is up to 10°, preferably up to 5°, particularly preferably up to 3°.

4. Paper punch according to one of the preceding claims, **characterized in that** an oscillator head (3) is provided which converts a rotary motion of a shaft of the drive into an oscillating motion for the hollow drill (6).

5. Paper punch according to one of the preceding claims, **characterized in that** a movably mounted ejector (5) is provided inside the hollow drill, which can eject paper located in the hollow drill (6) by means of an ejecting movement.

6. Paper punch according to the preceding claim, **characterized in that** the ejector (5) is magnetic and/or can be moved by the force of a magnet (8) arranged outside the hollow drill (6) for ejecting paper.

7. Paper punch according to the preceding claim, **characterized in that** the oscillator head (3) and/or a drill chuck (4) for the hollow drill (6) is attached to the pivotable end of the one arm (1, 3) and the pivotable end of the other, telescopic arm (10, 12) preferably comprises the magnet (8) arranged outside the hollow drill (6) and/or a rubber disc (7).

8. Paper punch according to the preceding claim, **characterized in that** the other, telescopic arm (10, 12) is telescopic in such a way that it can be shorter than the arm (1, 3) with the hollow drill (6) and/or the drill chuck by telescoping.

9. Paper punch according to one of the preceding claims, **characterized in that** a rubber disc (7) is provided as an abutment, which is preferably replaceably held by a holder.

10. Paper punch according to the preceding claim, **characterized in that** a force sensor is present by means of which a contact with the rubber disc can be monitored.

11. Paper punch according to one of the preceding claims, **characterized in that** the drive can be switched on and/or off by pivoting or telescoping one of the two hingedly interconnected arms (1, 3; 10, 12).

12. Paper punch according to one of the preceding claims, **characterized in that** a drill adapter comprising a drill chuck for receiving the hollow drill (6) is provided, which is preferably attached to an oscillator head (3), wherein the hollow drill (6) is preferably a biopsy punch.

13. Paper punch according to one of the preceding claims, **characterized in that** a drive unit (1) is provided, which comprises as drive an electric motor, a battery or a rechargeable battery, a switch or pushbutton, electronics and optionally a coil for inductively charging a rechargeable battery.

14. Paper punch according to one of the preceding claims, **characterized in that** a suction device is provided which can suck air through the hollow drill (6) during punching.

## Revendications

1. Poinçonneuse à papier, qui comprend un foret creux (6) en tant qu'outil de poinçonnage et un entraînement pour le foret creux (6),
dans lequel le foret creux (6) oscille par activation de l'entraînement,
dans lequel deux bras étant reliés de manière articulée l'un à l'autre existent,
dans lequel sur l'extrémité pivotante de l'un bras est monté le foret creux et l'extrémité pivotante et télescopique de l'autre bras (10, 12) est agencée ou peut être agencée de manière à pouvoir servir de culée pour le foret creux (6) lors du poinçonnage.

2. Poinçonneuse à papier selon la revendication précédente, **caractérisée en ce que** le foret creux (6) se tourne alternativement dans des directions opposées par l'activation de l'entraînement.

3. Poinçonneuse à papier selon la revendication précédente, **caractérisée en ce qu'**un mouvement de rotation du foret creux (6) dans chaque direction de rotation atteins jusqu'à 10°, de préférence jusqu'à 5°, de manière particulièrement préférée jusqu'à 3°.

4. Poinçonneuse à papier selon l'une des revendications précédentes, **caractérisée en ce qu'**il existe une tête d'oscillateur (3) qui convertit un mouvement de rotation d'un arbre de l'entraînement en un mouvement oscillant pour le foret creux (6).

5. Poinçonneuse à papier selon l'une des revendications précédentes, **caractérisée en ce qu'**il existe à l'intérieur du foret creux un éjecteur (5) arrangé de manière mobile qui peut éjecter du papier se retrouvant dans le foret creux (6) par un mouvement d'éjection.

6. Poinçonneuse à papier selon la revendication précédente, **caractérisée en ce que** l'éjecteur (5) est magnétique et/ou peut être déplacé par la force d'un aimant (8) disposé à l'extérieur du foret creux (6) pour éjecter du papier.

7. Poinçonneuse à papier selon la revendication précédente, **caractérisée en ce que** la tête d'oscillateur (3) et/ou un mandrin de foret (4) pour le foret creux (6) sont installés à l'extrémité pivotante de l'un bras (1, 3) et que l'extrémité pivotante de l'autre bras étant télescopique (10, 12) comprend de préférence l'aimant (8) disposé à l'extérieur du foret creux (6) et/ou un disque en caoutchouc (7).

8. Poinçonneuse à papier selon la revendication précédente, **caractérisée en ce que** l'autre bras étant télescopique (10, 12) est télescopique de telle sorte qu'il peut être plus court par télescopage que le bras (1, 3) avec le foret creux (6) et/ou le mandrin de foret.

9. Poinçonneuse à papier selon l'une des revendications précédentes, **caractérisée en ce qu'**il existe un disque en caoutchouc (7) servant de culée, qui est maintenu par un support de préférence de manière échangeable.

10. Poinçonneuse à papier selon la revendication précédente, **caractérisée en ce qu'**il existe un capteur de force qui permet de surveiller une pose sur le disque en caoutchouc.

11. Poinçonneuse à papier selon l'une des revendications précédentes, **caractérisée en ce que** l'entraînement peut être activé et/ou désactivé par un pivotement ou par un télescopage de l'un des deux bras (1, 3 ; 10, 12) reliés entre eux de manière articulée.

12. Poinçonneuse à papier selon l'une des revendications précédentes, **caractérisée en ce qu'**il existe un adaptateur de foret comprenant un mandrin de foret pour recevoir le foret creux (6), qui est de préférence fixé sur une tête d'oscillateur (3), dans lequel le foret creux (6) est de préférence une poinçonneuse à biopsie.

13. Poinçonneuse à papier selon l'une des revendications précédentes, **caractérisée en ce qu'**il existe une unité d'entraînement (1) qui comprend un moteur électrique en tant qu'entraînement, un accumulateur ou une batterie, un interrupteur ou poussoir, une électronique et, en option, une bobine pour charger un accumulateur par induction.

14. Poinçonneuse à papier selon l'une des revendications précédentes, **caractérisée en ce qu'**elle comprend un dispositif d'aspiration qui peut aspirer de l'air à travers le foret creux (6) pendant le poinçonnage.
